# EUROPÄISCHE PATENTSCHRIFT

(11) **EP 3 132 665 B1**
(45) Veröffentlichungstag und Bekanntmachung des Hinweises auf die Patenterteilung: **12.09.2018**
(21) Anmeldenummer: 16169123.3
(22) Anmeldetag: 11.05.2016
(51) Int. Cl.: A01D 41/127, A01D 43/08

(54) **LANDWIRTSCHAFTLICHE ERNTEMASCHINE**
AGRICULTURAL HARVESTER
MOISSONNEUSE

(30) Priorität: 17.08.2015 DE 102015113528
(43) Veröffentlichungstag der Anmeldung: 22.02.2017
(73) Patentinhaber: CLAAS Selbstfahrende Erntemaschinen GmbH, 33428 Harsewinkel (DE)
(72) Erfinder: Cord-Kruse, Christian, 48231 Warendorf (DE); Kriebel, Bastian, 48155 Münster (DE); Bussmann, Christoph, 33428 Harsewinkel (DE)

(56) Entgegenhaltungen:
- EP-A1- 1 053 671
- EP-A1- 2 936 969
- WO-A2-02/41687
- US-A- 4 967 544
- US-A1- 2006 123 757
- US-A1- 2014 230 391

## Beschreibung

Die Erfindung betrifft eine landwirtschaftliche Erntemaschine zur Verarbeitung eines Erntegutstroms mit den Merkmalen des Oberbegriffs von Anspruch 1.

Unter dem Begriff "landwirtschaftliche Erntemaschine" sind vorliegend alle Maschinen zusammengefasst, die der Verarbeitung eines Erntegutstroms dienen. Hierunter fallen Feldhäcksler, Mähdrescher, Ballenpressen o. dgl..

Die in Rede stehende landwirtschaftliche Erntemaschine ist mit einem Fahrerassistenzsystem zur Einstellung von Maschinenparametern der Erntemaschine ausgestattet. Dies erfolgt regelmäßig in Abhängigkeit von dem zu erwartenden oder tatsächlichen in die Erntemaschine einlaufenden Erntegutstrom. Dabei kommt der Feststellung, ob sich die Erntemaschine im Feldbestand oder außerhalb des Feldbestands, beispielsweise in einem Vorgewendebereich, befindet, für die korrekte Einstellung der Maschinenparameter besondere Bedeutung zu.

Die bekannte landwirtschaftliche Erntemaschine (DE 10 2008 043 716 B4), von der die Erfindung ausgeht, ist mit einem Feldbestandssensor ausgestattet, um auf Basis dieser Informationen Aufschluss über den zu erwartenden Erntegutstrom zu erhalten. Insbesondere wird mit dem Feldbestandssensor erfasst, ob überhaupt ein Erntegutstrom in die Erntemaschine einläuft, was vorliegend als Arbeitsphase "Erntegutstrom" bezeichnet wird, oder ob kein Erntegutstrom in die Erntemaschine einläuft, was vorliegend als Arbeitsphase "kein Erntegutstrom" bezeichnet wird. Die Erfassung einer Änderung der Arbeitsphase, beispielsweise, wenn sich die Erntemaschine aus dem Feldbestand in einen Vorgewendebereich bewegt, führt zu einer entsprechenden Änderung der Maschinenparameter durch das Fahrerassistenzsystem.

Zwar lässt sich ein Wechsel der Arbeitsphase mit der bekannten Erntemaschine vorausschauend erfassen, allerdings ist das vorgeschlagene Sensorsystem vergleichsweise aufwendig.

Es ist auch vorgeschlagen worden, einen in die Erntemaschine integrierten Gutstromsensor für die Erfassung der jeweiligen Arbeitsphase zu nutzen (EP 1 344 444 B1). Dies allerdings zur Herstellung einer hinreichenden Betriebssicherheit nur in Verbindung mit einem zusätzlichen, vibrationsmessenden Sensor. Als Grund für die Notwendigkeit des zusätzlichen Sensors wird angegeben, dass basierend auf den Sensormesswerten eine Unterscheidung der Arbeitsphasen nicht möglich sei, sofern der Erntegutstrom in der Arbeitsphase "Erntegutstrom" betragsmäßig gering sei.

Die US2006/0123757 A1 betrifft eine selbstfahrende Arbeitsmaschine, die eine Steuereinrichtung zur Regelung der Vorfahrtgeschwindigkeit aufweist, durch die eine Fahrgeschwindigkeit nach zwei Fahrstrategien geregelt wird.

Aus der nachveröffentlichten EP 2 936 969 A1 ist eine Kombination aus einem Zugfahrzeug und einer davon gezogenen landwirtschaftlichen Erntemaschine bekannt, die Mittel zur Erkennung aufweist, ob sich die Erntemaschine in einer Erntesituation oder in einer Feldende-Situation befindet.

Der Erfindung liegt das Problem zugrunde, eine Unterscheidung zwischen den Arbeitsphasen "Erntegutstrom" und "kein Erntegutstrom" auf betriebssichere und gleichzeitig kostengünstige Weise zu ermöglichen.

Das obige Problem wird bei einer landwirtschaftlichen Erntemaschine gemäß dem Oberbegriff von Anspruch 1 durch die Merkmale des kennzeichnenden Teils von Anspruch 1 gelöst.

Wesentlich ist die grundsätzliche Überlegung, dass sich das Gutstromsignal eines Gutstromsensors für die Unterscheidung zwischen den Arbeitsphasen "Erntegutstrom" und "kein Erntegutstrom" eignet, sofern hierfür nicht nur ein Absolutwert des Gutstromsignals, sondern auch die Charakteristik des zeitlichen Signalverlaufs des Gutstromsignals in Betracht gezogen wird. Es ist nämlich erkannt worden, dass in der Arbeitsphase "Erntegutdurchsatz" und bei geringem Erntegutdurchsatz der resultierende Absolutwert des Gutstromsignals zwar kaum unterscheidbar zu dem Absolutwert des Gutstromsignals in der Arbeitsphase "kein Erntegutdurchsatz" ist. Allerdings ist auch erkannt worden, dass sich das zeitliche Verhalten des Gutstromsignals von einer Arbeitsphase zur anderen Arbeitsphase deutlich ändert, so dass auf dieser Basis eine Unterscheidung zwischen den Arbeitsphasen betriebssicher möglich ist.

Im Einzelnen wird zunächst vorgeschlagen, dass die Erntemaschine einen Gutstromsensor mit einer Auswerteeinheit zur Erfassung des tatsächlich einlaufenden Erntegutstroms aufweist, wobei der Gutstromsensor ein Gutstromsignal mit einem zeitlichen Signalverlauf abgibt.

Die Erntemaschine ist im Übrigen so getroffen, dass der zeitliche Signalverlauf des Gutstromsignals in Abhängigkeit von der jeweiligen Arbeitsphase unterschiedlich ist. Es ist hier auch denkbar, dass die mechanische Konstruktion der landwirtschaftlichen Erntemaschine derart modifiziert wird, dass diese Unterschiedlichkeit der zeitlichen Signalverläufe besonders ausgeprägt stattfindet.

Schließlich wird vorgeschlagen, dass die Auswerteeinheit einen digitalen Filter nach einer Filtervorschrift bereitstellt, der aus dem insbesondere digitalisierten Gutstromsignal einen den zeitlichen Signalverlauf charakterisierenden Indikator erzeugt, wobei die Auswerteeinheit aus dem Indikator die aktuelle Arbeitsphase ermittelt. Daraufhin stellt das Fahrerassistenzsystem in Abhängigkeit von der ermittelten Arbeitsphase mindestens einen Maschinenparameter der Erntemaschine ein.

Mit der vorschlagsgemäßen Lösung ist eine Unterscheidung zwischen den beiden Arbeitsphasen "Erntegutdurchsatz" und "kein Erntegutdurchsatz" möglich, ohne dass neben dem Gutstromsensor ein zusätzlicher Sensor erforderlich wird. Dadurch, dass nunmehr die Charakteristik des zeitlichen Signalverlaufs des Gutstromsignals für die Unterscheidung herangezogen wird, lässt sich auch eine hohe Betriebssicherheit bei der Unterscheidung erzielen. Diese Betriebssicherheit lässt sich ohne weiteres dadurch erhöhen, dass entsprechende, oben angesprochene, Maßnahmen getroffen werden.

Die bevorzugten Ausgestaltungen gemäß den Ansprüchen 3 bis 5 betreffen verschiedene Ausgestaltungen des Filters, die auf unterschiedliche charakteristische Eigenschaften des Gutstromsignals ausgerichtet sind. Besonders bevorzugt ist die Ausgestaltung gemäß dem Anspruch 5, die jeweils der Unterscheidung zwischen den Arbeitsphasen die Erfassung der Signaländerung pro Zeiteinheit zugrunde legen.

Bei den weiter bevorzugten Ausgestaltungen gemäß den Ansprüchen 6 bis 8 ist es vorgesehen, dass die dem hier digitalen Filter zugrundeliegende Filtervorschrift modifizierbar oder austauschbar ist. Dies ist insoweit vorteilhaft, als während des Erntebetriebs unterschiedlicher Fruchtarten ganz unterschiedliche zeitliche Signalverläufe des Gutstromsignals auftreten. Diese entsprechende Anpassung des digitalen Filters an die jeweilige Fruchtart kann sogar automatisch basierend auf dem Signal eines Fruchtbestimmungssensors erfolgen, wie in Anspruch 8 vorgeschlagen ist.

Die ebenfalls bevorzugten Ausgestaltungen gemäß den Ansprüchen 9 bis 11 betreffen vorteilhafte Varianten für die auf einen Wechsel der Arbeitsphase zutreffenden Maßnahmen. Dabei steht die besonders bevorzugte Ausgestaltung gemäß Anspruch 11 im Vordergrund, bei der das Fahrerassistenzsystem eine Vorgewendeautomatik bereitstellt, die durch einen Wechsel der Arbeitsphase entsprechend aktiviert wird.
Im Folgenden wird die Erfindung anhand einer lediglich ein Ausführungsbeispiel darstellenden Zeichnung näher erläutert. In der Zeichnung zeigt
- Fig. 1: eine vorschlagsgemäße landwirtschaftliche Erntemaschine in einer ganz schematischen Darstellung,
- Fig. 2: die für die Erläuterung der Erfindung erforderlichen steuerungstechnischen Komponenten der Erntemaschine gemäß Fig. 1 einschließlich einer Auswerteeinheit und eines Fahrerassistenzsystems,
- Fig. 3: das Gutstromsignal und den den zeitlichen Signalverlauf charakterisierenden Indikator für eine Anordnung gemäß Fig. 2 a) bei hohem Erntegutstrom und b) bei geringem Erntegutstrom und
- Fig. 4: einen digitalen Filter der Auswerteeinheit gemäß Fig. 2.

Bei der dargestellten landwirtschaftlichen Erntemaschine 1 handelt es sich um einen Mähdrescher für die Verarbeitung von aufgenommenem Erntegut in Korngut. Grundsätzlich kann es sich bei der vorschlagsgemäßen Erntemaschine 1 um irgendeine Erntemaschine handeln, die der Verarbeitung eines Erntegutstroms dient. Entsprechend kann es sich bei der Erntemaschine 1 auch um einen Feldhäcksler, eine Ballenpresse o. dgl. handeln. Alle Ausführungen zu dem Mähdrescher gelten für alle anderen Arten von Erntemaschinen entsprechend.

Die dargestellte Erntemaschine 1 weist ein Eingangsaggregat 2 auf, das mit einem austauschbaren Erntevorsatz 3 ausgestattet ist. An den Erntevorsatz 3 schließt sich ein nicht austauschbarer Schrägförderer 4 an, der das über das Eingangsaggregat 2 aufgenommene Erntegut einem Dreschwerk 5 zuführt. Dem Dreschwerk 5 nachgelagert sind eine Abscheidevorrichtung 6, eine Reinigungsvorrichtung 7 sowie eine Verteileinrichtung 8 zur Verteilung der Nichtkornbestandteile auf dem Feld. Soweit das Eingangsaggregat 2 betroffen ist, zeigt die als Feldhäcksler ausgestattete Erntemaschine 1 einen ähnlichen oder sogar identischen Aufbau auf wie die dargestellte, als Mähdrescher ausgestaltete Erntemaschine 1.

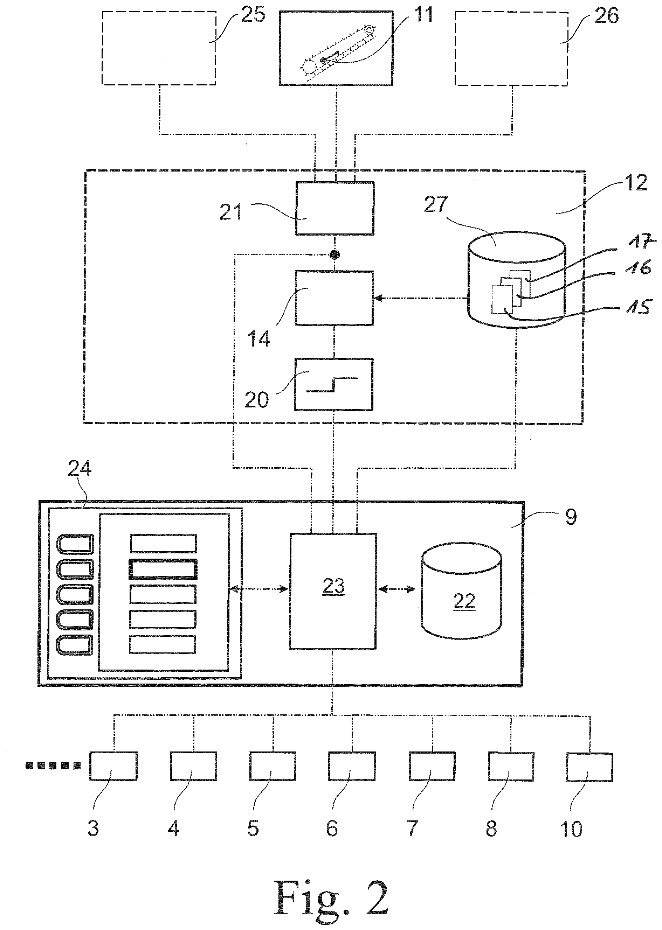

Es lässt sich der Darstellung gemäß Fig. 2 entnehmen, dass die vorschlagsgemäße Erntemaschine 1 ein Fahrerassistenzsystem 9 zur Einstellung von Maschinenparametern der Erntemaschine 1 aufweist. Solche Maschinenparameter können das Eingangsaggregat 2, den Schrägförderer 4, das Dreschwerk 5, die Abscheidevorrichtung 6, die Reinigungsvorrichtung 7, die Verteileinrichtung 8 o. dgl. betreffen.

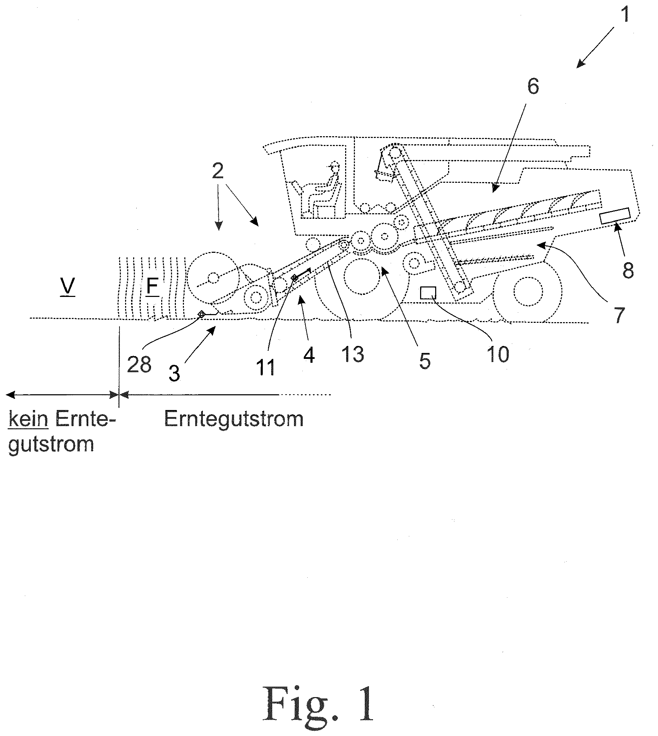

Vorliegend steht die Erfassung im Vordergrund, ob sich die Erntemaschine 1 innerhalb oder außerhalb des Feldbestands F befindet. Hierfür sind eine Arbeitsphase "Erntegutstrom" definiert, in der ein Erntegutstrom in die Erntemaschine 1 einläuft, und eine Arbeitsphase "kein Erntegutstrom" definiert, in der kein Erntegutstrom in die Erntemaschine 1 einläuft. In Fig. 1 betrifft die Arbeitsphase "Erntegutstrom" den Betrieb im Feldbestand F, während die Arbeitsphase "kein Erntegutstrom" den Betrieb in einem Vorgewendebereich V betrifft.

Beim Übergang von der Arbeitsphase "Erntegutstrom" auf die Arbeitsphase "kein Erntegutstrom" ändert das Fahrerassistenzsystem 9 eine Reihe von Maschinenparametern, die insbesondere den Erntevorsatz 3 und den Fahrantrieb 10 betreffen. Dies wird weiter unten im Detail erläutert. Ganz allgemein ist es so, dass das Fahrerassistenzsystem 9 in Abhängigkeit von der jeweiligen Arbeitsphase mindestens einen Maschinenparameter der Erntemaschine 1 einstellt.

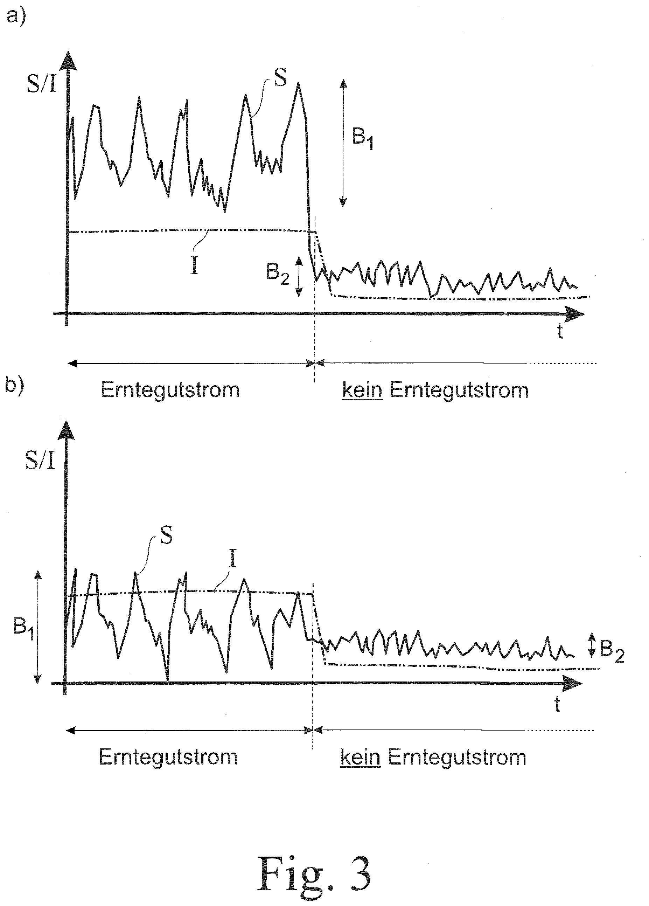

Die vorschlagsgemäße Erntemaschine 1 ist mit einem Gutstromsensor 11 ausgestattet, dem eine Auswerteeinheit 12 zur Erfassung des einlaufenden Erntegutstroms zugeordnet ist. Der Gutstromsensor 11 gibt ein in Fig. 3 in zwei Beispielen dargestelltes Gutstromsignal S mit einem zeitlichen Signalverlauf ab. Für die Ausgestaltung des Gutstromsensors 11 sind zahlreiche vorteilhafte Varianten denkbar. Hier und vorzugsweise handelt es sich bei dem Gutstromsensor 11 um einen an sich bekannten Schichthöhensensor, der in Abhängigkeit von der Höhe des einlaufenden Erntegutstroms die resultierende Auslenkung der dem Schrägförderer 4 zugeordneten, umlaufenden Fördereinheit 13 detektiert und daraus das Gutstromsignal S erzeugt.

Die Auswerteeinheit 12 arbeitet vorliegend vorzugsweise digital, so dass dann das Gutstromsignal S entsprechend in digitaler Form vorliegt. Hierfür kann es vorgesehen sein, dass der Gutstromsensor 11 selbst einen Analog-/Digitalwandler aufweist. Alternativ kann ein solcher Analog-/Digitalwandler auch separat vom Gutstromsensor 11 vorgesehen sein.

Eine Voraussetzung für die vorschlagsgemäße Lösung ist, dass der zeitliche Signalverlauf des Gutstromsignals S in Abhängigkeit von der jeweiligen Arbeitsphase unterschiedlich ist. Dies ist vorliegend am besten der Darstellung gemäß Fig. 3 zu entnehmen. Hier zeigt sich bereits auf den ersten Blick, dass die Charakteristik des Signalverlaufs unabhängig vom Betrag der jeweiligen Signalwerte unterschiedlich ist. Genau das wird vorschlagsgemäß für die Unterscheidung zwischen den Arbeitsphasen genutzt.

Im Einzelnen stellt die Auswerteeinheit 12 einen digitalen Filter 14 nach einer Filtervorschrift 15-17 bereit, der aus dem digitalisierten Gutstromsignal S einen den zeitlichen Signalverlauf des Gutstromsignals S charakterisierenden Indikator I erzeugt. Die Auswerteeinheit 12 wiederum ermittelt aus dem Indikator I die aktuelle Arbeitsphase, so dass das Fahrerassistenzsystem 9 in Abhängigkeit von der Arbeitsphase mindestens einen Maschinenparameter der Erntemaschine 1 einstellen kann.

Die Unterschiedlichkeit der Signalverläufe des Gutstromsignals S in den beiden Arbeitsphasen kann auf verschiedene Faktoren zurückgehen. Der Signalverlauf des Gutstromsignals S in der Arbeitsphase "Erntegutstrom" wird im Wesentlichen von der Beschaffenheit des in die Erntemaschine 1 einlaufenden Ernteguts bestimmt. Grobgliedriges Erntegut führt in erster Näherung zu einer größeren Dynamik im Gutstromsignal als feingliedriges Erntegut, das gleichmäßiger durch den Schrägförderer 4 hindurchläuft.

In der Arbeitsphase "kein Erntegut" wird der Verlauf des Gutstromsignals durch die Erntemaschine 1 selbst, beispielsweise durch die antriebstechnisch in der Erntemaschine 1 erzeugten Vibrationen, erzeugt. Die Erzeugung des Verlaufs des Gutstromsignals kann hier beispielsweise auf den Antrieb des Schrägförderers 4 oder aus den motorischen Bewegungen anderer Arbeitsaggregate der Erntemaschine 1 resultieren. Durch die unterschiedlichen Quellen des Verlaufs des Gutstromsignals in den beiden Arbeitsphasen ist die vorschlagsgemäße Lösung weitgehend universell einsetzbar.

Fig. 3a zeigt den Übergang von der Arbeitsphase "Erntegutstrom" bei hohem Erntegutstrom auf die Arbeitsphase "kein Erntegutstrom". Hier ließe sich eine Unterscheidung zwischen den beiden Arbeitsphasen ohne Weiteres durch einen Vergleich der Betragswerte des Gutstromsignals S mit einem Entscheidungsschwellwert vornehmen, ohne dass die Gefahr einer Fehlerfassung der jeweiligen Arbeitsphase besteht.

Anders ist es bei der in Fig. 3b dargestellten Situation, die den Übergang von der Arbeitsphase "Erntegutstrom" bei geringem Erntegutstrom auf die Arbeitsphase "kein Erntegutstrom" zeigt. Hier sind die Betragswerte des Gutstromsignals in beiden Arbeitsphasen teilweise identisch, so dass eine auf den Betragswerten basierende Unterscheidung zwischen den beiden Arbeitsphasen nicht möglich ist. Hier hilft, wie ein Blick auf Fig. 3 zeigt, eine Analyse des zeitlichen Signalverlaufs des Gutstromsignals S.

In Abhängigkeit von der Ausgestaltung des Gutstromsensors 11 und der Erntemaschine 1 insgesamt können sich die zeitlichen Verläufe des Gutstromsignals S in den beiden Arbeitsphasen auf verschiedene Weise unterscheiden.

In einer Variante, die auswertungstechnisch leicht umsetzbar ist, weist das Gutstromsignal S in der Arbeitsphase "Erntegutstrom" unterschiedliche Frequenzanteile als in der Arbeitsphase "kein Erntegutstrom" auf, wobei der Indikator I von dem Frequenzspektrum des Gutstromsignals S bestimmt wird. Hier beschreibt die Filtervorschrift 15-17 vorzugsweise einen Hochpassfilter, einen Tiefpassfilter oder einen Bandpassfilter, so dass die Zuordnung des Gutstromsignals S zu einer der beiden Arbeitsphasen leicht herausfilterbar ist. Für die Analyse des Frequenzspektrums kann beispielsweise eine Fast-FourierTransformation (FFT) Anwendung finden.

Alternativ oder zusätzlich kann es vorgesehen sein, dass das Gutstromsignal S in der Arbeitsphase "Erntegutstrom" eine unterschiedliche, insbesondere größere, vorzugsweise mittlere, Streuungsbreite B als in der Arbeitsphase "kein Erntegutstrom" aufweist, wobei der Indikator I von der Streuungsbreite B des Signalverlaufs bestimmt wird. Die Streuungsbreite ist in Fig. 3 mit dem Bezugszeichen "B₁" für die Arbeitsphase "Erntegutstrom" und mit dem Bezugszeichen "B₂" für die Arbeitsphase "kein Erntegutstrom" angedeutet. Für die Streuungsbreite B sind verschiedene mathematische Definitionen denkbar. Grundsätzlich kann es sich bei der Streuungsbreite um die an sich bekannte Varianz des Gutstromsignals S handeln.

Fig. 3 zeigt, dass sich bei dem dargestellten und insoweit bevorzugten Ausführungsbeispiel die Streuungsbreite B grundsätzlich für die Unterscheidung zwischen den beiden Arbeitsphasen eignet. Interessant dabei ist die Tatsache, dass die Streuungsbreite B nicht von den Absolutwerten bzw. von dem jeweiligen Mittelwert des Gutstromsignals S abhängt.

Grundsätzlich kann auch die Signaländerung pro Zeiteinheit eine Charakteristik aufweisen, die zu einer Unterscheidbarkeit der Arbeitsphasen führt. Beispielsweise kann dies den Mittelwert des Betrags der Signaländerung pro Zeiteinheit über einen bestimmten Zeitraum betreffen. Ganz allgemein kann es vorgesehen sein, dass die Charakteristik des Betrags der Signaländerung pro Zeiteinheit in der Arbeitsphase "Erntegutstrom" unterschiedlich, insbesondere größer ist, als in der Arbeitsphase "kein Erntegutstrom", wobei der Indikator I von dem durchschnittlichen Betrag der Signaländerung pro Zeiteinheit bestimmt wird. Es lässt sich der Darstellung gemäß Fig. 3 entnehmen, dass der Betrag der Signaländerung pro Zeiteinheit dort in der Arbeitsphase "Erntegutstrom" weitaus größer ist als in der Arbeitsphase "kein Erntegutstrom", jedenfalls soweit der Mittelwert dieses Betrages betroffen ist.

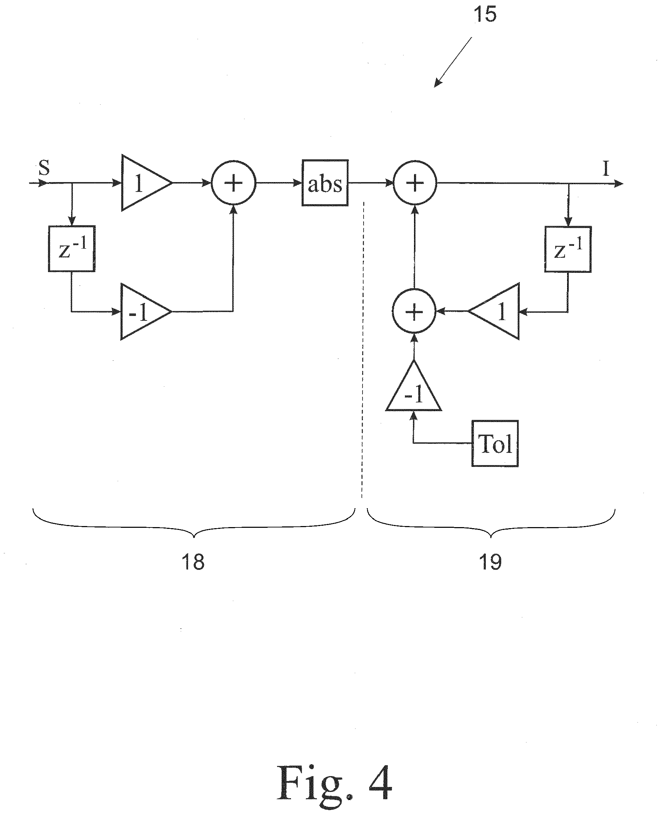

Fig. 4 zeigt eine Filtervorschrift 15 für den digitalen Filter 14, die den Indikator I in Abhängigkeit von dem Betrag der Signaländerung pro Zeiteinheit bestimmt.

Die Filtervorschrift 15 beschreibt ein erstes Filterglied 18, in dem der Absolutbetrag des Änderungswertes erzeugt wird, welcher Änderungswert sich aus der Differenz zweier aufeinanderfolgender Signalwerte des Gutstromsignals S ergibt. Im zweiten Filterglied 19 wird aus den Beträgen der Änderungswerte der Indikator I erzeugt. Grundsätzlich kann hier ein Mittelwert, insbesondere ein mitlaufender Mittelwert, gebildet werden. Hier und vorzugsweise ist es allerdings so, dass das zweite Filterglied 19 die Beträge der Änderungswerte aufaddiert, und bei jedem Additionsschritt einen Toleranzwert Tol von dem jeweiligen Betrag des Änderungswertes subtrahiert. Hier ist dem Filterglied 19 vorzugsweise ein weiteres, nicht dargestelltes Filterglied nachgeschaltet, das eine Begrenzung des Indikators I bewirkt. Andernfalls würde der Indikator I in der Arbeitsphase "Erntegutstrom" unentwegt ansteigen.

Ganz allgemein wird vorgeschlagen, dass der digitale Filter 14 taktweise einen Änderungswert für die Änderung aufeinanderfolgender Sensorsignale erzeugt, wobei der digitale Filter 14 den Indikator I taktweise erhöht oder reduziert in Abhängigkeit davon, ob der Betrag des Änderungswertes eine vorbestimmte Toleranzschwelle Tol überschreitet oder nicht. Im Ergebnis zeigt der Indikator I, inwieweit die ermittelten Änderungswerte betragsmäßig die Toleranzschwelle Tol über bzw. unterschreiten. Dies kann wiederum für die Unterscheidung zwischen den beiden Arbeitsphasen genutzt werden.

Die oben beispielhaft genannten Indikatoren I geben jeweils einen Wert an, aus dessen Höhe auf die jeweilige Arbeitsphase geschlossen werden kann. Entsprechend ist es hier und vorzugsweise so, dass dem digitalen Filter 14 ein einfacher Entscheidungsschwellwertfilter 20 nachgeschaltet ist, dessen Ausgang davon abhängt, ob der Indikator I einen vorbestimmten Entscheidungsschwellwert überschreitet.

Der grundsätzliche Aufbau der für die vorschlagsgemäße Lehre erforderlichen steuerungstechnischen Komponenten ist in Fig. 2 gezeigt. Dort ist der Gutstromsensor 11 schematisch dargestellt, dessen Gutstromsignal S der Auswerteeinheit 12 zugeleitet wird. Vorzugsweise wird das Gutstromsignal S in einem digitalen Vorfilter 21 vorgefiltert und gelangt im vorgefilterten Zustand zu dem oben erläuterten, digitalen Filter 14, der das Gutstromsignal S nach einer Filtervorschrift 15-17 verarbeitet. Vorliegend wird auch das vorgefilterte Gutstromsignal im Sinne einer übersichtlichen Darstellung als "Gutstromsignal S" bezeichnet, da der Vorfilter 21 allenfalls eine Befreiung des Gutstromsignals S von Störsignalen o. dgl. bewirkt.

Am Ausgang des digitalen Filters 14 befindet sich ein oben angesprochener Schwellwertfilter 20, dessen Ausgang Aufschluss darüber gibt, in welcher Arbeitsphase sich die Erntemaschine 1 befindet.

In Fig. 2 ist ferner das Fahrerassistenzsystem 9 schematisch dargestellt. Das Fahrerassistenzsystem 9 weist einen Speicher 22 zum Hinterlegen von Daten und eine Rechenvorrichtung 23 zur Verarbeitung der in dem Speicher 22 hinterlegten Daten auf. Die Rechenvorrichtung 23 ist dazu eingerichtet, mindestens einen Maschinenparameter der Erntemaschine 1 zu ermitteln und den verschiedenen Arbeitsaggregaten 3, 4, 5, 6, 7, 8, 10 vorzugeben, wie ebenfalls in Fig. 2 angedeutet ist. Dem Fahrerassistenzsystem 9 ist ferner eine noch zu erläuternde Ein-/Ausgabeeinheit 24 zugeordnet.

Es darf darauf hingewiesen werden, dass für die Unterscheidung zwischen den Arbeitsphasen die vorschlagsgemäße Analyse des zeitlichen Signalverlaufs des Gutstromsignals S ausreicht. Grundsätzlich kann es aber auch vorgesehen sein, dass weitere Sensoren 25, 26 vorgesehen sind, mit denen sich die Unterscheidungssicherheit und damit die Betriebssicherheit weiter erhöhen lässt. Beispiele für solche Sensoren sind beispielsweise Bestandskantensensoren o. dgl., die sich beispielsweise am Erntevorsatz 3 befinden können.

Die Auswerteeinheit 12 weist hier und vorzugsweise ebenfalls einen Speicher 27 zum Hinterlegen von Daten, insbesondere zum Hinterlegen von Filtervorschriften 15-17, auf. Dies ist der Tatsache geschuldet, dass hier und vorzugsweise die dem digitalen Filter 14 zugrundeliegende Filtervorschrift 15-17 durch die Auswerteeinheit 12 modifizierbar und weiter vorzugsweise speicherbar ist. Alternativ oder zusätzlich sind in der Auswerteeinheit 12 mindestens zwei auswählbare Filtervorschriften 15-17 gespeichert, wobei die Auswerteeinheit 12 den digitalen Filter 14 nach der jeweils ausgewählten Filtervorschrift 15-17 bereitstellt. Es wurde bereits darauf hingewiesen, dass fruchtartabhängig unterschiedliche Sensorsignalverläufe auftreten können, welche die Anwendung unterschiedlicher digitaler Filter 14 notwendig erscheinen lässt.

In einer besonders bevorzugten Ausgestaltung weist das Fahrerassistenzsystem 9 die oben erläuterte Ein-/Ausgabeeinheit 24 auf, wobei die dem hier und vorzugsweise digitalen Filter 14 zugrundeliegende Filtervorschrift 15-17 durch den Benutzer über die Ein-/Ausgabeeinheit 14 modifizierbar und/oder aus gespeicherten Filtervorschriften auswählbar ist. Diese Auswahl kann auch indirekt erfolgen derart, dass der Benutzer die jeweils zu erntende Fruchtart auswählt und dass die Auswerteeinheit 12 oder das Fahrerassistenzsystem 9 basierend auf dieser Benutzereingabe die anzuwendende Filtervorschrift 15-17 festlegt.

Eine für den Benutzer besonders komfortable Ausgestaltung ergibt sich dadurch, dass ein Fruchtbestimmungssensor 28 zur Ermittlung der zu erntenden Fruchtart vorgesehen ist, wobei die Auswerteeinheit 12 oder das Fahrerassistenzsystem 12 die dem digitalen Filter 14 zugrundeliegende Filtervorschrift 15-17 in Abhängigkeit von der ermittelten Fruchtart modifiziert. Auch hier ist es vorzugsweise so, dass die jeweilige Filtervorschrift aus den in der Auswerteeinheit 12 gespeicherten Filtervorschriften 15-17 ausgewählt wird.

Grundsätzlich kann die Fruchtart und/oder die jeweils anzuwendende Filtervorschrift 15-17 auch aus dem Gutstromsignal S selbst ermittelt werden, sofern sich dem Sensorsignalverlauf entsprechende Informationen über die Fruchtart entnehmen lassen.

Schließlich darf noch auf eine besonders bevorzugte Variante für die Auslegung des hier und vorzugsweise digitalen Filters 14, insbesondere für die Modifikation oder Auswahl der jeweiligen Filtervorschrift 15-17, hingewiesen werden. In dieser Variante ist eine Lernfahrt vorgesehen, in welcher der Benutzer aus dem Feldbestand F herausfährt oder in den Feldbestand F hineinfährt, so dass sich ein entsprechender Wechsel der Arbeitsphase ergibt. Im Rahmen dieser Lernfahrt ermittelt die Auswerteeinheit 12 charakteristische Unterschiede in den Signalverläufen des Gutstromsignals S und bestimmt daraufhin eine optimierte Auslegung des digitalen Filters 14. Diese Auslegung kann grundsätzlich wiederum auf eine Auswahl einer Filtervorschrift 15-17 aus den in der Auswerteeinheit 12 gespeicherten Filtervorschriften 15-17 zurückgehen.

Es sind grundsätzlich eine Reihe vorteilhafter maschinenseitiger Reaktionen auf die Erfassung eines Wechsels der Arbeitsphase denkbar. Beispielsweise kann es vorgesehen sein, dass die Auswerteeinheit 12 beim Wechsel in die Arbeitsphase "kein Erntegutstrom" keinen Absolutwert des Gutstromsignals S mehr an das Fahrerassistenzsystem 9 weiterleitet und lediglich die Überprüfung des Gutstromsignals S auf einen weiteren Wechsel der Arbeitsphase fortsetzt.

In besonders bevorzugter Ausgestaltung ist es weiter so, dass die Erntemaschine 1 einen von dem Fahrerassistenzsystem 9 realisierten Vorfahrtregler aufweist, welcher der insbesondere autonomen Einstellung einer Fahrgeschwindigkeit der Erntemaschine 1 dient. Der Vorfahrtregler ermöglicht beispielsweise die Einhaltung eines vorbestimmten Erntegutstroms o. dgl.. Außerhalb des Feldbestands F kann der Vorfahrtregler grundsätzlich deaktiviert sein. Entsprechend wird vorgeschlagen, dass das Fahrerassistenzsystem 9 basierend auf der Ermittlung eines Übergangs zwischen der Arbeitsphase "Erntegutstrom" und der Arbeitsphase "kein Erntegutstrom" den Vorfahrtregler aktiviert bzw. deaktiviert.

Alternativ oder zusätzlich kann es vorgesehen sein, dass das Fahrerassistenzsystem 9 basierend auf der Ermittlung eines Übergangs zwischen der Arbeitsphase "Erntegutstrom" und der Arbeitsphase "kein Erntegutstrom" die Antriebsleistung mindestens eines Arbeitsaggregats, insbesondere des Eingangsaggregats 2, hochsetzt bzw. heruntersetzt. Beispielsweise ist es sachgerecht, das Dreschwerk 5 eines Mähdreschers bzw. das Häckselwerk eines Feldhäckslers mit reduzierter Antriebsleistung anzutreiben, solange sich der Mähdrescher bzw. der Feldhäcksler in der Arbeitsphase "kein Erntegutstrom" befindet.

Von besonderer Bedeutung ist die vorschlagsgemäße Lösung für den bevorzugten Fall, dass das Fahrerassistenzsystem 9 eine Vorgewendeautomatik bereitstellt und bei der Erfassung des Übergangs der Arbeitsphase "Erntegutstrom" auf die Arbeitsphase "kein Erntegutstrom" und ggf. der Erfüllung mindestens einer weiteren Bedingung eine Vorgewende-Arbeitsschrittsequenz auslöst. Die Erfüllung der weiteren Bedingung stellt sicher, dass sich die Erntemaschine 1 tatsächlich in einen Vorgewendebereich V bewegt. Die Erfüllung dieser weiteren Bedingung kann beispielsweise auf der Überprüfung eines GPS-Signals zurückgehen.

Für die Realisierung einer Vorgewende-Arbeitsschrittsequenz sind verschiedene Möglichkeiten denkbar, die im Wesentlichen von der Auslegung der Erntemaschine 1 abhängen. Für eine als Mähdrescher ausgestaltete Erntemaschine 1 kann die Vorgewende-Arbeitsschrittsequenz beispielsweise darin bestehen, dass beim Eintritt der Erntemaschine 1 in den Vorgewendebereich V zunächst die Antriebsdrehzahl für die Arbeitsaggregate und/oder den Fahrantrieb 10 reduziert wird bzw. werden, anschließend das Eingangsaggregat 2 angehoben wird und für das Abfahren einer Vorgewendefahrspur eine entsprechende Getriebeübersetzung des Fahrantriebs 10 eingestellt wird. Andere Vorgewende-Arbeitsschrittsequenzen sind denkbar.

### Bezugszeichenliste

- 1: Erntemaschine
- 2: Eingangsaggregat
- 3: Erntevorsatz
- 4: Schrägförderer
- 5: Dreschwerk
- 6: Abscheidevorrichtung
- 7: Reinigungsvorrichtung
- 8: Verteileinrichtung
- 9: Fahrerassistenzsystem
- 10: Fahrantrieb
- F: Feldbestand
- V: Vorgewendebereich
- 11: Gutstromsensor
- 12: Auswerteeinheit
- S: Gutstromsignal
- 13: Fördereinheit
- 14: digitaler Filter
- 15-17: Filtervorschrift
- 18: erstes Filterglied
- 19.: zweites Filterglied
- Tol: Toleranzschwelle
- 20: Schwellfilter
- 21: Vorfilter
- 22: Speicher des Fahrerassistenzsystems
- 23: Rechenvorrichtung
- 24: Ein-/Ausgabeeinheit
- 25, 26: weitere Sensoren
- 27: Speicher der Auswerteeinheit
- 28: Fruchtbestimmungssensor

## Patentansprüche

1. Landwirtschaftliche Erntemaschine zur Verarbeitung eines Erntegutstroms mit einem Fahrerassistenzsystem (9) zur Einstellung von Maschinenparametern der Erntemaschine (1), wobei eine Arbeitsphase "Erntegutstrom" definiert ist, in der ein Erntegutstrom in die Erntemaschine (1) einläuft, und eine Arbeitsphase "kein Erntegutstrom" definiert ist, in der kein Erntegutstrom in die Erntemaschine (1) einläuft, wobei das Fahrerassistenzsystem (9) in Abhängigkeit von der Arbeitsphase mindestens einen Maschinenparameter der Erntemaschine (1) einstellt, wobei ein Gutstromsensor (11) mit einer Auswerteeinheit (12) zur Erfassung des einlaufenden Erntegutstroms vorgesehen ist und dass der Gutstromsensor (11) ein Gutstromsignal (S) mit einem zeitlichen Signalverlauf abgibt,
**dadurch gekennzeichnet, dass** der zeitliche Signalverlauf des Gutstromsignals (S) in Abhängigkeit von der jeweiligen Arbeitsphase unterschiedlich ist, wobei die Charakteristik des zeitlichen Signalverlaufs des Gutstromsignals für die Unterscheidung in Betracht gezogen wird,
indem die Auswerteeinheit (12) einen digitalen Filter (14) nach einer Filtervorschrift (15-17) bereitstellt, der aus dem Gutstromsignal (S) einen den zeitlichen Signalverlauf charakterisierenden Indikator (I) in der Weise erzeugt, dass der digitale Filter (14) taktweise einen Änderungswert für die Änderung aufeinanderfolgender Sensorsignale erzeugt und der digitale Filter (14) den Indikator (I) taktweise erhöht oder reduziert in Abhängigkeit davon, ob der Betrag des Änderungswertes eine vorbestimmte Toleranzschwelle Tol überschreibt oder nicht,und dass die Auswerteeinheit (12) aus dem Indikator (I) die aktuelle Arbeitsphase ermittelt.

2. Landwirtschaftliche Erntemaschine nach Anspruch 1, **dadurch gekennzeichnet, dass** die Erntemaschine (1) als Mähdrescher oder als Feldhäcksler ausgestaltet ist und dass der Gutstromsensor (11) die Schichtdicke des Erntegutstroms erfasst und als Gutstromsignal (S) ausgibt.

3. Landwirtschaftliche Erntemaschine nach Anspruch 1 oder 2, **dadurch gekennzeichnet, dass** das Gutstromsignal (S) in der Arbeitsphase "Erntegutstrom" unterschiedliche Frequenzanteile als in der Arbeitsphase "kein Erntegutstrom" aufweist und dass der Indikator (I) gemäß einer der Filtervorschriften (15 - 17) von dem Frequenzspektrum des Gutstromsignals (S) bestimmt wird.

4. Landwirtschaftliche Erntemaschine nach einem der vorhergehenden Ansprüche, **dadurch gekennzeichnet, dass** das Gutstromsignal (S) in der Arbeitsphase "Erntegutstrom" eine unterschiedliche, insbesondere größere, Streuungsbreite (B) als in der Arbeitsphase "kein Erntegutstrom" aufweist und dass der Indikator (I) gemäß einer der Filtervorschriften (15 - 17) von der Streuungsbreite (B) des Signalverlaufs bestimmt wird.

5. Landwirtschaftliche Erntemaschine nach einem der vorhergehenden Ansprüche, **dadurch gekennzeichnet, dass** der Betrag der Signaländerung pro Zeiteinheit in der Arbeitsphase "Erntegutstrom" unterschiedlich, insbesondere größer, ist als in der Arbeitsphase "kein Erntegutstrom" und dass der Indikator (I) gemäß einer der Filtervorschriften (15 - 17) von dem Betrag der Signaländerung pro Zeiteinheit bestimmt wird.

6. Landwirtschaftliche Erntemaschine nach einem der vorhergehenden Ansprüche, **dadurch gekennzeichnet, dass** die dem digitalen Filter (14) zugrundeliegende Filtervorschrift (15-17) durch die Auswerteeinheit (12) modifizierbar ist, und/oder, dass in der Auswerteeinheit (12) mindestens zwei auswählbare Filtervorschriften (15-17) gespeichert sind und dass die Auswerteeinheit (12) den digitalen Filter (14) nach der jeweils ausgewählten Filtervorschrift (15-17) bereitstellt.

7. Landwirtschaftliche Erntemaschine nach einem der vorhergehenden Ansprüche, **dadurch gekennzeichnet, dass** das Fahrerassistenzsystem (9) eine Ein-/Ausgabeeinheit (24) aufweist und dass die dem vorzugsweise digitalen Filter (14) zugrundeliegende Filtervorschrift (15-17) durch den Benutzer über die Ein-/Ausgabeeinheit (24) modifizierbar und/oder aus gespeicherten Filtervorschriften (15-17) auswählbar ist.

8. Landwirtschaftliche Erntemaschine nach einem der vorhergehenden Ansprüche, **dadurch gekennzeichnet, dass** ein Fruchtbestimmungssensor (28) zur Ermittlung der zu erntenden Fruchtart vorgesehen ist und dass die Auswerteeinheit (12) die dem digitalen Filter (14) zugrundeliegende Filtervorschrift (15-17) in Abhängigkeit von der ermittelten Fruchtart modifiziert, vorzugsweise aus gespeicherten Filtervorschriften (15-17) auswählt.

9. Landwirtschaftliche Erntemaschine nach einem der vorhergehenden Ansprüche, **dadurch gekennzeichnet, dass** die Erntemaschine (1) einen Vorfahrtregler für die insbesondere autonome Einstellung einer Fahrgeschwindigkeit der Erntemaschine (1) aufweist und dass das Fahrerassistenzsystem (9) basierend auf der Ermittlung eines Übergangs zwischen der Arbeitsphase "Erntegutstrom" und der Arbeitsphase "kein Erntegutstrom" den Vorfahrtregler aktiviert bzw. deaktiviert.

10. Landwirtschaftliche Erntemaschine nach einem der vorhergehenden Ansprüche, **dadurch gekennzeichnet, dass** das Fahrerassistenzsystem (9) basierend auf der Ermittlung eines Übergangs zwischen der Arbeitsphase "Erntegutstrom" und der Arbeitsphase "kein Erntegutstrom" die Antriebsleistung mindestens eines Arbeitsaggregats hochsetzt bzw. heruntersetzt.

11. Landwirtschaftliche Erntemaschine nach einem der vorhergehenden Ansprüche, **dadurch gekennzeichnet, dass** das Fahrerassistenzsystem (9) eine Vorgewendeautomatik bereitstellt und bei der Erfassung des Übergangs der Arbeitsphase "Erntegutstrom" auf die Arbeitsphase "Kein Erntegutstrom" und ggf. der Erfüllung mindestens einer weiteren Bedingung eine Vorgewende-Arbeitsschrittsequenz auslöst.

## Claims

1. An agricultural harvester for processing a crop material flow having a driver assistance system (9) for setting machine parameters of the harvester (1), wherein a working phase "crop material flow" is defined in which a crop material flow passes into the harvester (1) and a working phase "no crop material flow" in which no crop material flow passes into the harvester (1), wherein the driver assistance system (9) sets at least one machine parameter of the harvester (1) in dependence on the working phase, wherein there is provided a material flow sensor (11) with an evaluation unit (12) for detecting the incoming crop material flow and the material flow sensor (11) delivers a material flow signal (S) with a time signal configuration, **characterised in that** the time signal configuration of the material flow signal (S) is different in dependence on the respective working phase, wherein the characteristic of the time signal configuration of the material flow signal is considered for the difference, by the evaluation unit (12) providing a digital filter (14) in accordance with a filter specification (15-17), which from the material flow signal (S) produces an indicator (I) characterising the time signal configuration, in such a way that the digital filter (14) cyclically produces a change value for the change in successive sensor signals and the digital filter (14) cyclically increases or reduces the indicator (I) in dependence on whether the magnitude of the change value does or does not exceed a predetermined tolerance threshold Tol and the evaluation unit (12) ascertains the currently prevailing working phase from the indicator (I).

2. An agricultural harvester according to claim 1 **characterised in that** the harvester (1) is in the form of a combine harvester or a forage harvester and the material flow sensor (11) detects the layer thickness of the crop material flow and outputs same as the material flow signal (S).

3. An agricultural harvester according to claim 1 or claim 2 **characterised in that** the material flow signal (S) in the working phase "crop material flow" involves different frequency components from in the working phase "no crop material flow" and the indicator (I) is determined in accordance with one of the filter specifications (15-17) by the frequency spectrum of the material flow signal (S).

4. An agricultural harvester according to one of the preceding claims **characterised in that** the material flow signal (S) in the working phase "crop material flow" is of a different and in particular greater scatter width (B) than in the working phase "no crop material flow" and the indicator (I) is determined in accordance with one of the filter specifications (15-17) by the scatter width (B) of the signal configuration.

5. An agricultural harvester according to one of the preceding claims **characterised in that** the magnitude of the signal change per unit of time in the working phase "crop material flow" is different and in particular greater than in the working phase "no crop material flow" and the indicator (I) is determined in accordance with one of the filter specifications (15-17) by the magnitude of the signal change per unit of time.

6. An agricultural harvester according to one of the preceding claims **characterised in that** the underlying filter specification (15-17) of the digital filter (14) can be modified by the evaluation unit (12) and/or at least two selectable filter specifications (15-17) are stored in the evaluation unit (12) and the evaluation unit (12) provides the digital filter (14) in accordance with the respectively selected filter specification (15-17).

7. An agricultural harvester according to one of the preceding claims **characterised in that** the driver assistance system (9) has an input/output unit (24) and the underlying filter specification (15-17) of the preferably digital filter (14) can be modified by the user by way of the input/output unit (24) and/or can be selected from stored filter specifications (15-17).

8. An agricultural harvester according to one of the preceding claims **characterised in that** there is provided a crop type determining sensor (28) for ascertaining the type of crop to be harvested and the evaluation unit (12) modifies the underlying filter specification (15-17) of the digital filter (14) in dependence on the ascertained type of crop, and preferably selects same from stored filter specifications (15-17).

9. An agricultural harvester according to one of the preceding claims **characterised in that** the harvester (1) has a propulsion regulator for in particular autonomous setting of a travel speed of the harvester (1) and the driver assistance system (9) activates or deactivates the propulsion regulator based on ascertaining a transition between the working phase "crop material flow" and the working phase "no crop material flow".

10. An agricultural harvester according to one of the preceding claims **characterised in that** the driver assistance system (9) increases or reduces the drive power of at least one working assembly based on ascertaining a transition between the working phase "crop material flow" and the working phase "no crop material flow".

11. An agricultural harvester according to one of the preceding claims **characterised in that** the driver assistance system (9) provides an automatic headland system and triggers a headland working step sequence upon detection of a transition from the working phase "crop material flow" to the working phase "no crop material flow" and optionally the fulfillment of at least one further condition.

## Revendications

1. Machine agricole de récolte pour traiter un flux de produit récolté, comprenant un système d'assistance à la conduite (9) pour régler des paramètres machine de la machine de récolte (1), une phase de travail « flux de produit récolté » étant définie, dans laquelle un flux de produit récolté entre dans la machine de récolte (1), et une phase de travail « aucun flux de produit récolté » étant définie, dans laquelle aucun flux de produit récolté n'entre dans la machine de récolte (1), le système d'assistance à la conduite (9) réglant au moins un paramètre machine de la machine de récolte (1) en fonction de la phase de travail, un capteur de flux de produit (11) étant prévu avec une unité d'analyse (12) pour détecter le flux de produit récolté entrant, et en ce que le capteur de flux de produit (11) délivre un signal de flux de produit (S) avec une courbe de signal temporelle, **caractérisée en ce que** la courbe de signal temporelle du signal de flux de produit (S) est différente en fonction de la phase de travail respective, la caractéristique de la courbe de signal temporelle du signal de flux de produit étant prise en considération pour la différenciation par le fait que l'unité d'analyse (12) fournit, selon une prescription de filtre (15-17), un filtre numérique (14) qui, à partir du signal de flux de produit (S), génère un indicateur (I) caractérisant la courbe de signal temporelle, de façon que le filtre numérique (14) génère en cadence une valeur de variation pour la variation de signaux de capteur successifs, et le filtre numérique (14) augmente ou réduit en cadence l'indicateur (I) selon que la grandeur de la valeur de variation surpasse ou non un seuil de tolérance ToI prédéterminé, et **en ce que** l'unité d'analyse (12) détermine la phase de travail instantanée à partir de l'indicateur (I).

2. Machine agricole de récolte selon la revendication 1, **caractérisée en ce que** la machine de récolte (1) est conformée en moissonneuse-batteuse ou en ensileuse, et **en ce que** le capteur de flux de produit (11) détecte l'épaisseur de couche du flux de produit récolté et la délivre sous forme de signal de flux de produit (S).

3. Machine agricole de récolte selon la revendication 1 ou 2, **caractérisée en ce que** le signal de flux de produit (S) présente, dans la phase de travail « flux de produit récolté », des parts de fréquences différentes par rapport à la phase de travail « aucun flux de produit récolté », et **en ce que**, conformément à une des prescriptions de filtre (15-17), l'indicateur (I) est déterminé par le spectre de fréquences du signal de flux de produit (S).

4. Machine agricole de récolte selon une des revendications précédentes, **caractérisée en ce que** le signal de flux de produit (S) présente, dans la phase de travail « flux de produit récolté », une largeur de dispersion (B) différente, en particulier supérieure, par rapport à la phase de travail « aucun flux de produit récolté », et **en ce que**, conformément à une des prescriptions de filtre (15-17), l'indicateur (I) est déterminé par la largeur de dispersion (B) de la courbe de signal.

5. Machine agricole de récolte selon une des revendications précédentes, **caractérisée en ce que** la grandeur de la variation de signal par unité de temps dans la phase de travail « flux de produit récolté » est différente, en particulier supérieure, par rapport à la phase de travail « aucun flux de produit récolté », et **en ce que**, conformément à une des prescriptions de filtre (15-17), l'indicateur (I) est déterminé par la grandeur de la variation de signal par unité de temps.

6. Machine agricole de récolte selon une des revendications précédentes, **caractérisée en ce que** la prescription de filtre (15-17) imposée au filtre numérique (14) est modifiable par l'intermédiaire de l'unité d'analyse (12) et/ou **en ce que** dans l'unité d'analyse (12) sont mémorisées au moins deux prescriptions de filtre sélectionnables (15-17), et **en ce que** l'unité d'analyse (12) fournit le filtre numérique (14) selon la prescription de filtre respectivement sélectionnée (15-17).

7. Machine agricole de récolte selon une des revendications précédentes, **caractérisée en ce que** le système d'assistance à la conduite (9) comporte une unité d'entrée/sortie (24), et **en ce que** la prescription de filtre (15-17) imposée au filtre de préférence numérique (14) est modifiable par l'utilisateur par l'intermédiaire de l'unité d'entrée/sortie (24) et/ou sélectionnable à partir de prescriptions de filtre mémorisées (15-17).

8. Machine agricole de récolte selon une des revendications précédentes, **caractérisée en ce qu'**un capteur de détermination de culture (28) est prévu pour déterminer le type de culture à récolter, et **en ce que**, en fonction du type de culture déterminé, l'unité d'analyse (12) modifie la prescription de filtre (15-17) imposée au filtre numérique (14), de préférence à partir de prescriptions de filtre mémorisées (15-17).

9. Machine agricole de récolte selon une des revendications précédentes, **caractérisée en ce que** la machine de récolte (1) comporte un régulateur d'avancement pour le réglage en particulier autonome d'une vitesse d'avancement de la machine de récolte (1), et **en ce que** le système d'assistance à la conduite (9) active, respectivement désactive le régulateur d'avancement sur la base de la détermination d'un passage entre la phase de travail « flux de produit récolté » et la phase de travail « aucun flux de produit récolté ».

10. Machine agricole de récolte selon une des revendications précédentes, **caractérisée en ce que** le système d'assistance à la conduite (9) accroît, respectivement réduit la puissance d'entraînement au moins d'un organe de travail sur la base de la détermination d'un passage entre la phase de travail « flux de produit récolté » et la phase de travail « aucun flux de produit récolté ».

11. Machine agricole de récolte selon une des revendications précédentes, **caractérisée en ce que** le système d'assistance à la conduite (9) fournit un automatisme de franchissement de tournière et déclenche une séquence d'opérations de franchissement de tournière en cas de détection du passage de la phase de travail « flux de produit récolté » à la phase de travail « aucun flux de produit récolté » et, le cas échéant, en cas de réalisation d'au moins une autre condition.
